# EUROPEAN PATENT SPECIFICATION

(11) **EP 2 093 677 B1**
(45) Date of publication and mention of the grant of the patent: **17.11.2010**
(21) Application number: 08165536.7
(22) Date of filing: 30.09.2008
(51) Int. Cl.: G06F 17/30

(54) **Data selection method and apparatus**
Datenauswahlverfahren und Gerät
Méthode et apparatus pour la selection des données

(30) Priority: 25.02.2008 GB 0803317
(43) Date of publication of application: 26.08.2009
(73) Proprietor: Empora Limited, 6 New Street Square London EC4A 3LX (GB)
(72) Inventor: Heesch, Daniel, London, W6 8QH (GB)
(74) Representative: McCann, Heather Alison

(56) References cited:
- KO Y ET AL: "Using the feature projection technique based on a normalized voting method for text classification" INFORMATION PROCESSING & MANAGEMENT, ELSEVIER, BARKING, GB, vol. 40, no. 2, 1 March 2004 (2004-03-01), pages 191-208, XP004482612 ISSN: 0306-4573
- PAUL BROWNE ET AL: "iBase: Navigating Digital Library Collections" IMAGE AND VIDEO RETRIEVAL LECTURE NOTES IN COMPUTER SCIENCE;;LNCS, SPRINGER, BERLIN, DE, vol. 4071, 1 January 2006 (2006-01-01), pages 510-513, XP019036068 ISBN: 978-3-540-36018-6

## Description

### Field of the Invention

The present invention relates to a method and system for selecting objects from a repository of objects which are each characterised according to a plurality of measurable features, and is particularly but not exclusively applicable to multimedia objects such as images, audio files and files comprising alphanumeric characters. Embodiments of the invention are also related to the visual presentation of objects so as to enable rapid browsing through a database.

### Background of the Invention

The spread of broadband networks along with the falling costs for content production and storage have over the last few years fuelled a remarkable growth in the volume of digital data accessible on the World Wide Web (WWW). The data is varied and comprises images, videos, music files and text documents with each media type typically coming in a wide range of formats.

The conventional way of searching for such data on the WWW is by formulating a text query and waiting for the search engine to retrieve all items that match the query. Alternatively, the user must browse through a hierarchical ordering of items in the database (for example, in e-commerce sites that sell footwear, the user first chooses between male and female footwear, then selects between shoes, boots and sandals, and then chooses the brand). This leads to a list of items that belong to the selected categories.

While textual search has its virtues, in particular for text documents, it can be rather limiting for richer media such as images, videos and music files. First and foremost, textual search requires multimedia objects to have been annotated with descriptive tags that can be used during the matching process. If such annotation is unavailable, textual search ceases to be an option. In addition to being labour intensive, manual annotation is a highly subjective process: it is well established that the tags chosen by different people for the same image can vary considerably. Furthermore, non-textual objects like images can be extraordinarily rich carriers of information with content that often cannot easily be put into words, be this by the person annotating the objects in the first place, or by the users querying the database.

Instead of relying on tags that may or may not have been added to the multimedia data, a recent approach is to analyse the data itself using methods from digital signal processing and cast the data into some form of numerical representation that captures certain features of the actual content. These features, such as image colour, brightness, texture, shape or acoustic loudness, spectral balance or sound rhythmic structure can then form the content of the database. This has the advantage of automatically summarising each multimedia item into a few simple numbers or categories, thus expediting the storage and search of the multimedia information. Since the features are objective and are similar to the processes of human perception, it circumvents the problem of subjective annotation.

The conventional method of accessing such databases is by submitting an exemplar that is similar to what the user is looking for. Features are extracted from this exemplar item and used to perform a similarity search amongst the features that were previously extracted from the database items. The search system then returns a set of multimedia items that are similar to the exemplar item under the extracted features. An early example of this approach is IBM's QBIC system, http://wwwqbic.almaden.ibm.com, a more recent example is retrievr at http://labs.systemone.at/retrievr/ which allows users to draw and submit a sketch. The general methodology is commonly referred to as content-based multimedia retrieval (a special branch of the field of information retrieval).

Whilst solving some of the problems plaguing text-based search, content-based retrieval faces a number of challenges on its own. The foremost challenge has become known as the semantic gap and refers to the discrepancy between the low-level numerical representation of the content and the high-level meaning of the data as a user would understand it. For example, while colour is an important cue describing the content of an image, humans tend to think in terms of concepts and objects represented by or depicted in an image. Approaches to narrow this semantic gap include relevance feedback which involves the labelling of retrieved images according to their perceived relevance to the user. From this relevance information, the system may attempt, for example, to estimate the relative importance of different features and uses this estimate to query the database again.

Although the incorporation of relevance feedback techniques can result in substantial performance gains, it fails to address a number of important issues. Users may not have a well-defined information need in the first place and may simply wish to explore the collection of multimedia items. Moreover, users are required to already be in possession of a similar item with which to start a search, which cannot generally be expected to hold. Lastly, searching for similar items requires the computation of pair-wise distances between the query and items from the database, which incurs a considerable computational cost at search time and renders the method impractical for very large collections.

Given the problems mentioned above with current prior art in multimedia database retrieval, it is sometimes preferable, and particularly if the user is not familiar with the typical content of the database, to re-organise the database by exposing meaningful structure in the data, There are several approaches to solving this problem. The first of these involves grouping the database items according to major similarity clusters as in, for example, WO2005/033869 in the context of product catalogues, US6941321 in the case of document databases, and US6993180 in the context of image databases. Theses clusters can be further broken down into sub-clusters to produce a completely hierarchical organisation of the database (US6993180).

These clusters contain groups of database items that are more similar to each other under several features than they are to the majority of the rest of the items in the database. This clustering helps to summarise the variability in the database items into manageable groupings. The user can then focus their search on clusters which are similar to the item they wish to find. The advantage of such precomputed structures is that navigation is very fast since no queries need to be executed at run-time. However, such structures are invariably generated by applying the same fixed distance metric to all items in the collection, i.e. items are organised on the assumption that we know the relative importance of features and that this is the same for all items of the collection. The advantage of precomputed structures comes therefore at the price that users can no longer remould the structure according to their own perception of similarity (for example through relevance feedback). Moreover, for very large databases it becomes impractical to display the clusters conveniently on one page.

In order to circumvent such problems with clustering methods, a different approach has been taken: that of network browsing. A network is a graph structure with nodes for each multimedia item, and edges that connect these multimedia items if they are considered similar according to their features. One such network is the so-called NN^{k} network, described in "The NNk Technique for Image Searching and Browsing", Ph. D. Thesis, D. Heesch, Imperial College of Science, Technology and Medicine, 2005. This method applies to a collection of objects each of which represented in terms of k features (for images, these features could relate to colour and texture properties). In this context, the set of NN^{k} items of some reference item (henceforth called the focal item) has been proposed as all those items from the database that are closest to the focal item in the k-dimensional feature space under a selected parametrised distance metric (a general mathematical measure of distance). The parametrised metric computes the overall distance between two objects as the weighted sum over feature-specific distances, and different feature weights lead to a different metric and thus to different similarities between the focal item and those from the database.

Unfortunately, exact determination of the set of NN^{k} items requires the search of a k-dimensional space of weights with a time complexity that is exponential in the number of features k. Thus, such a technique is less suited for practical applications involving very large multimedia databases.

WO2004/0215657 proposes to annotate files with descriptive tags (metadata), which are descriptors describing the files. WO2004/0215657 discloses that "the additional objects can be grouped and/or clustered by their respective metadata (e.g., same author, movies books, etc.)", which is to say that the metadata of different objects is associated in a binary fashion between the objects (i.e. metadata tag is either present (thus shared between objects), or not present). The "additional objects" within the generated groups or clusters must share the metadata tag by which they are being clustered, and as such, the "additional objects" cannot be ordered/arranged in any meaningful fashion on the basis of that single attribute: as a result the ability of the system to discriminate between different objects that share a particular metadata tag is extremely limited. In addition, and because the tags are descriptive, the system is only capable of associating files together on the basis of input previously entered by the user, which is user intensive.

A further publication, by Ko, Y et al, is entitled "Using the feature projection technique based on a normalized voting method for text classification" (Information Processing & Management, Elsevier, Barking, GB, vol.40, no. 2, 1 March 2004, pages 191-208, XP004482612 ISSN: 0306-4573). This publication discusses a text classification method based on a feature projection technique, in which training data are represented as the projections of training documents on each feature (term). The voting for a classification or category is processed on the basis of individual feature projections. The final classification of test documents is determined by a majority voting from the individual classifications of each feature. In such a method, all features are projected onto a new virtual feature. It is thus an object of the present invention to provide a system for structuring a large multimedia database so that it can be quickly and easily searched and navigated, without requiring a significant computational burden or user guidance.

### Summary of the Invention

In accordance with a first aspect of the present invention, there is provided a data selection method and systems according to the appended independent claims. Preferred features are set out in the dependent claims.

In a first aspect there is provided a data selection method for selection of objects from a plurality of objects, said plurality of objects comprising objects of a first type and a second type, each said object being characterised according to a plurality of measurable features and said object of the first type forming the basis of a selection process, the method comprising performing a selection process in respect of an object of the first type, the selection process comprising:
receiving data identifying the object of the first type;
evaluating values representative of a measure of similarity between the object of the first type and said objects of the second type on the basis of measurable features associated, respectively, with said object of the first type and said objects of the second type;
ranking said objects of the second type in accordance with said evaluated values,
**characterised in that** said values are evaluated on the basis of a single measurable feature and the evaluation is performed so as to generate a plurality of groups of ranked objects, each group corresponding to a different measurable feature; and
identifying a predetermined number of objects from said plurality of groups of ranked objects, whereby to select objects on the basis of said object of the first type.

By evaluating the values on the basis of a single measurable feature, embodiments of the invention determine the closest predetermined (*m*) objects under the extremal weight combinations for which all feature weights but one are zero. For example, for three features these would be (1,0,0), (0,1,0), (0,0,1), in which case the neighbours of an object according to this method will be the union of these sets of top *m* objects. This differs from the NN^{k} method described above since; instead of finding the closest (or most relevant) single object under many different weight combinations and forming the union of those objects, a much smaller subset of weight combinations is considered.

In one arrangement the objects are multimedia objects such as image files, and for such objects the measurable features comprise any one or some of the following exemplary list: shape, texture, colour, intensity, edge effects. The objects could also comprise, or be, audio objects, in which case the measurable features could include any one of the following exemplary list: tone, timbre, pitch, and volume. Additionally or alternatively the objects could comprise, or be alphanumeric components.

Determination of neighbours according to embodiments of the invention is computationally much more attractive than using prior art methods such as the prior art NN^{k} method described above: indeed, whilst this known method involves sorting the weighted distances for each of multiple weight combinations, the approximate method requires only a sorting of the feature specific distances. The improvement increases dramatically as the number of features under consideration increases. Furthermore embodiments of the invention provide a means of controlling the number of neighbours of an object by simply changing the predetermined parameter *m*, thereby guaranteeing that a user will be presented with a specified number of objects. As a result the method provides a convenient mechanism for browsing through objects that are displayed, for example, on a web page or similar.

In one arrangement each of the predetermined number of objects appearing in the ranked list is a different object, and the predetermined number of objects are identified by sequentially reviewing objects within individual ones of the groups of ranked objects. Conveniently the selection process is repeated for different objects of the first type, also referred to herein as "focal objects", and execution of the selection process is performed in respect of a different focal object such that any given focal object for a given execution of the selection process is an object of the second type for a different execution of the selection process. In the event that a new object is introduced, the selection process is repeated so as to evaluate associations that account for this new object. Once the process has been completed, the storage system is updated to reflect the effect of the newly introduced object.

In one arrangement the objects and ranking data are stored in association with their respective focal object, and these data are collectively used to render the objects in a display area - e.g. on a remote terminal. The objects can be presented on the remote terminal such that objects having a relatively high ranking order are positioned closer to the given said object of the first type than are objects having a relatively low ranking order.

As mentioned above, embodiments of the invention also provide a means for a user to interact with the object data, for example to select different objects so as to set a different object as the focal object. This triggers a retrieval process whereby objects corresponding to this newly designated focal object are retrieved and rendered in the display area.

According to a further aspect of the present invention there is provided a distributed system for performing the method, and indeed computer software, which, when executed, causes a computer to perform the afore-mentioned steps.

Further features and advantages of the invention will become apparent from the following description of preferred embodiments of the invention, given by way of example only, which is made with reference to the accompanying drawings.

### Brief Description of the Drawings

Figure 1 is a schematic diagram showing a network within which embodiments of the invention operate;
Figure 2 is a schematic block diagram showing an arrangement of the server shown in Figure 1 according to an embodiment of the invention;
Figure 3 is a flow diagram showing steps performed by the server of Figure 1 according to an embodiment of the invention;
Figure 4 is a flow diagram showing further steps performed by the server of Figure 1 according to an embodiment of the invention;
Figure 5 is a schematic diagram showing output rendered by a terminal shown in Figure 1 according to a further aspect of an embodiment of the invention;
Figure 6 is a schematic diagram showing output rendered by the terminal of Figure 1 in response to user input at the terminal; and
Figure 7 is a schematic diagram showing further output rendered by the terminal of Figure 1 in response to further user input at the terminal.

In the accompanying Figures various parts are shown in more than one Figure; for clarity the reference numeral initially assigned to a part is used to refer to the part in the first and subsequent Figures.

### Detailed Description of the Invention

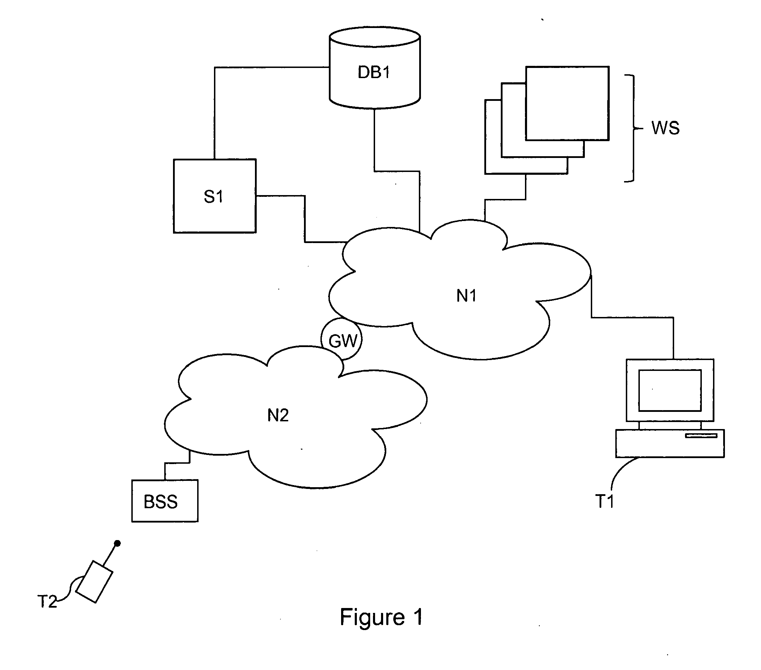

As described above, embodiments of the invention are concerned with a method and system for identifying relationships between objects such as multimedia objects so as to enable selection on the basis of features of the objects. A detailed description of the methods and processes required to perform the selection processes will be described in detail below, but first an overview of an environment in which embodiments of the invention can operate will be described with reference to Figure 1.

Figure 1 shows a server S1 operatively connected to a data store DB1, this being arranged to hold data indicative of objects that are subject to the selection process. The data store DB1 can hold data indicative of digitally coded multimedia objects such as audio files, image files and alphanumeric files, and it is to be understood that all references to objects in the examples given below apply to all such types of objects. Each object can be analysed and parameterised in terms of features that are derivable from the digital representation of the object. These features are derivable from a knowledge of the format with which they were created, common examples thereof being Graphic Interchange Format (GIF), JPEG, MPEG, Audio/Video Interleaved (AVI), QUICKTIME, Tag Image File Format (TIFF). Any given file type organises the data according to a standardised format, and this provides a convenient mechanism for information to be extracted therefrom, and either used directly as indicative of a certain feature or transposed so as to derive the feature of interest. For example, in the case of image files, features of interest can include colour, brightness, texture, shape, surface finish, material; these features can be computed on the basis of individual pixels or a group of pixels within the image, as will be described in more detail below.

The data store DB I can be populated directly via a user interface device, or it can include means for querying remote data sources and thereby autonomously retrieve objects for analysis according to embodiments of the invention. Figure 1 shows a plurality of web servers WS, remotely connected to the data store DB1 via network N1: these can be accessed by software running in conjunction with the data store DB1 so as to query web site databases for particular categories or specific multimedia objects, and download objects meeting the criteria to the data store DB1.

In addition to the raw image data, the data store DB1 stores post-processed data for retrieval and output to remote terminals T1, T2. As shown in Figure 1, terminals T1, T2 are in communication with the server S1 via networks N1 and N2. Each terminal is equipped with software (to be described in detail below) that enables the terminal to retrieve data from the database DB1 and to render the retrieved data so as to enable user selection and manipulation thereof, this resulting in a query for further post-processed object data from the data store DB 1. As can be seen from the Figure, terminal T2 is connected to network N1 via a radio network N2, and terminal T2 is connected via wired links to the network N1, and thus the connection requirements associated with the terminals are different: these will be described in more detail later in the description.

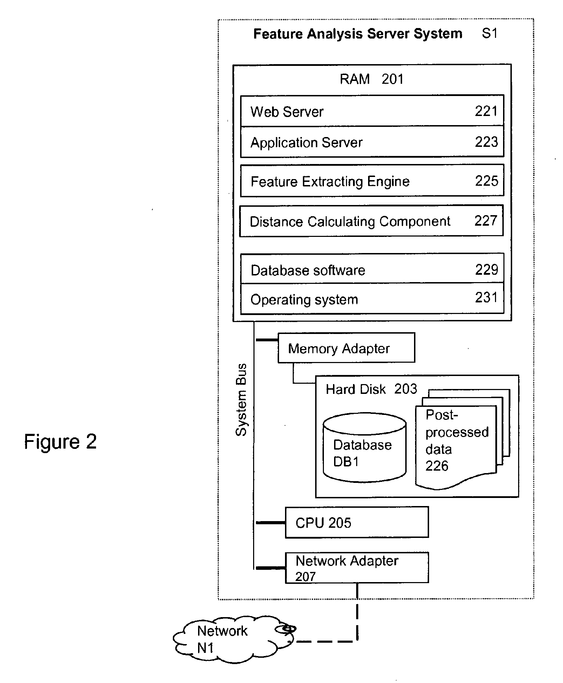

Turning now to Figure 2, the configuration of embodiments of the invention, implemented as software components running on server S1, will be described. The server S1 comprises conventional operating system and storage components (system bus connecting the central processing unit (CPU) 205, hard disk 203, random access memory (RAM) 201, I/O and network adaptors 207 facilitating connection to user input/output devices interconnection with other devices on the network N1). The Random Access Memory (RAM) 201 contains operating system software 231 which control, in a known manner, low-level operation of the server S1. The server RAM 217 also contains application server software 223 and web server software 221, database software 229, a feature extracting engine 225 and distance calculating component 227, both to be described below. In this exemplary arrangement the server's hard disk 203 contains the database data store DB1 and various post-processed files 226, but it will be appreciated from Figure 1 that the data store DB 1 can be hosted on a physically distinct device, accessible by the server S1 via the network N1.

The bespoke software components 225, 227 read in and manipulate the object data so as to extract features therefrom and evaluate relationships between the object data using a metric defined on the vector space of the corresponding feature. In one arrangement the feature extracting engine 225 firstly identifies the format of a given object and transforms it into a selected, common, format; in the case of image files for example, these can be transformed into the JPEG format. (Since, as mentioned above, multimedia objects conform to standard formats, conversion of features corresponding to objects retrieved from a mixture of sources, and thus having a corresponding variety of formats, can conveniently be performed.) Having transformed the objects into a uniform format, values of various measurable parameters are identified. In relation to the current example of the object being an image file, these parameters can be derived via quantisation of the colour space and represented as histograms, and/or by converting an image into an intensity image (i.e. the average across the three colours red, green, blue), and/or by computing the response of a plurality of filters (Gabor filters) that are applied to the image, and/or simply using the raw intensity values.

The images are conveniently decomposed into a predetermined number of tiles, and these values are computed for each such tile so as to generate a set of discrete parameter values for each image object (each member of the set corresponding to a tile within the image). These sets of values are manipulated, in a known manner, to generate one or more of a colour structure descriptor (HDS) feature value, a global Hue Saturation Brightness (HSV) feature, a thumbnail feature, a wavelet feature, a coarseness feature value, a contrast feature value, a directionality feature value, a texture feature value using methods described in Section 4.4.2 of Chapter 4 of "The NNk Technique for Image Searching and Browsing", Ph. D. Thesis, D. Heesch, Imperial College of Science, Technology and Medicine, 2005.

The distance calculating component 227 takes, as input, the quantified feature values and on the basis of a suitable metric, identifies the distance between respective objects in a selected metric space. Suitable metrics include the L1 metric (the well known city block distance), the Euclidean metric, higher order Minkowski metrics, or distance measures such as the Earth Mover's Distance or a kind of Histogram Diffusion Distance. The skilled person will realise that other metrics could be used. These metrics can be applied to vectors (for example, under Euclidean distance) as well as objects like strings and graphs which cannot be easily represented as vectors. For vectors, the L1 metric is typically used, and is the preferred metric utilised in the current embodiment.

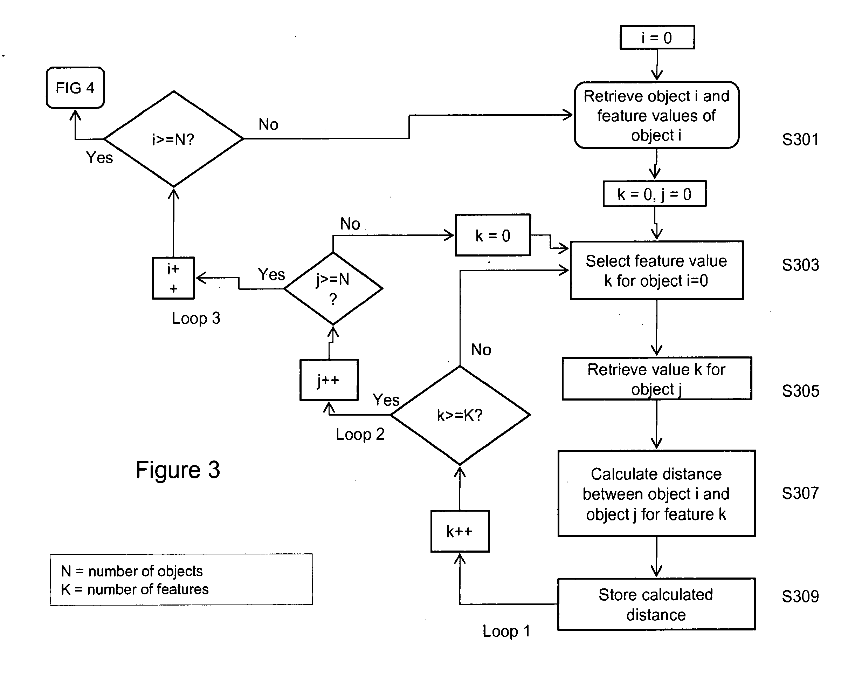

This feature extraction process is shown in Figure 3: for one of the objects, a feature k is selected (S301, S303) and compared against the corresponding feature of another object in the data store DB1 (S305, S307) so as to evaluate the similarity between the objects as measured according to this feature k. The distance calculating component 227 stores the distance values, for example in a post-processed file 226. These steps (S303 ... S309) are repeated, sequentially, for all features, as indicated by "k++" of "Loop 1" in Figure 3. Having completed the evaluation for all features in relation to one object, the next object is selected, as indicated by "j++" of "Loop 2", and the steps repeated for that object. Once all of the objects in the data store DB 1 have been compared across all features in relation to object i=0, the next object is selected, as indicated by "i++" of "Loop 3", and the routines indicated in association with Loops 1 & 2 are repeated. These steps are repeated, iteratively, until all features of all objects have been compared with respect to one another.

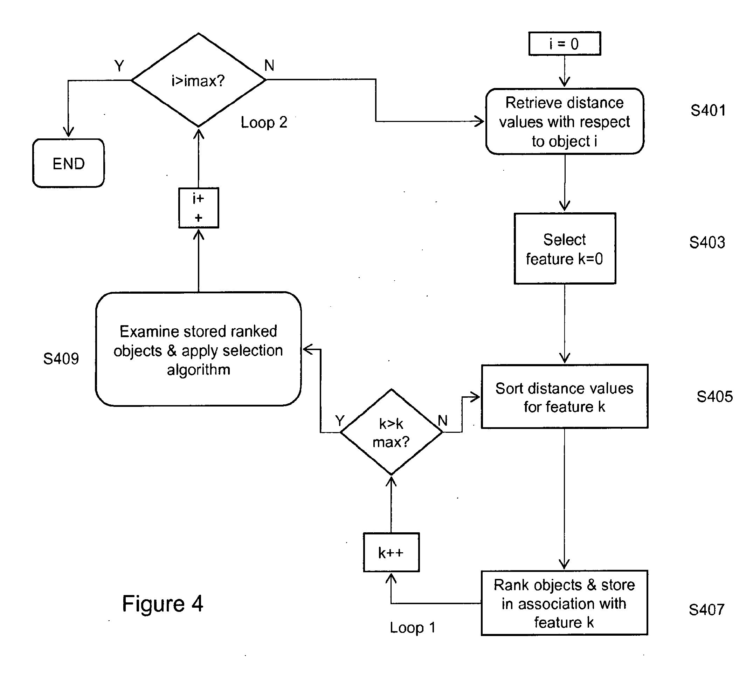

Taking any given object as a reference, or focal, object (that is to say, an object with respect to which the distances are calculated), and having identified the distances between the given object and others in the data store DB 1 for each feature, the distance calculating component 227 then applies a ranking process. This process is based on the distance values evaluated at step S307, as will be described with reference to Figure 4 and generates, as output, a pool of objects that are deemed to be similar to the given object on one or more of the features.

Turning to Figure 4, at step S401, the distance values stored in relation to the first selected object (i=0) are retrieved, and for each feature (k), the distance values are sorted so as to order the objects with respect to this first selected object (steps S405, S407). These steps are repeated for each feature, as indicated by "Loop 1". This part of the processing represents the biggest departure from known methods: objects are sorted according to distance from the object of interest on the basis of a single feature. That is to say without including weighted contributions from any more than one feature. Recalling from the background section, the prior art NN^{k} method evaluates the neighbourhood according to a weighted combination of the features (per D = w_1*D_1 + w_2*D_2 + w_3*D_3, where w_i indicates a weight for feature i and D_i indicates a distance for feature i). In embodiments of the invention, however, and as will be appreciated from Figure 4, distance values are calculated on the basis of distances measured on a single feature. Thus for evaluations based on a selected object Iₓ (the focal object), then for three features k₁, k₂, k₃ and four other objects I₁, I₂, I₃, I₄ in the data store DB1, this can conveniently be expressed in terms of the three extremal weight sets (W₁,W₂,W₃), namely (1,0,0), (0,1,0) and (0,0,1). This results in the following calculations at step S405:

| | I₁ | I₂ | I₃ | I₄ |
|---|---|---|---|---|
| k₁ | 1 x D_{1,1} | 1 x D_{2,1} | 1 x D_{3,1} | 1 x D_{4,1} |
| k₂ | 0 x D_{1,2} | 0 x D_{2,2} | 0 x D_{3,2} | 0 x D_{4,2} |
| k₃ | 0 x D_{1,3} | 0 x D_{2,3} | 0 x D_{3,3} | 0 x D_{4,3} |

| | I₁ | I₂ | I₃ | I₄ |
|---|---|---|---|---|
| k₁ | 0 x D_{1,1} | 0 x D_{2,1} | 0 x D_{3,1} | 0 x D_{4,1} |
| k₂ | 1 x D_{1,2} | 1 x D_{2,2} | 1 x D_{3,2} | 1 x D_{4,2} |
| k₃ | 0 x D_{1,3} | 0 x D_{2,3} | 0 x D_{3,3} | 0 x D_{4,3} |

| | I₁ | I₂ | I₃ | I₄ |
|---|---|---|---|---|
| k₁ | 0 x 0_{1,1} | 0 x D_{2,1} | 0 x D_{3,1} | 0 x D₄,₁ |
| k₂ | 0 x D_{1,2} | 0 x D_{2,2} | 0 x D_{3,2} | 0 x D_{4,2} |
| k₃ | 1 x D_{1,3} | 1 x D_{2,3} | 1 x D_{3,3} | 1 x D_{4,3} |

Once the distance values have been calculated in respect of a given feature k, the values are organised in terms of their respective magnitudes (step S407) so as to generate ordered groups of objects. The groups of objects are then examined in order to select a predetermined number of objects from the thus-ordered groups: more specifically, in one arrangement the distance calculating component 227 creates a pool of objects and populates the pool by moving through each group in a round-robin scheme, adding objects to the pool that have not previously been selected according to their ordering within a respective group. This analysis and adding to the pool is repeated until a predetermined number of objects are in the pool (step S409).

In one arrangement, this can be implemented by specifying the number of objects within a given group that are candidates for insertion in the pool. For example, in the context of the four objects and three features set out above, successive iterations of step S405 result in the following ordering of objects:
k₁: I₁ I₃ I₄ I₂
k₂: I₁ I₂ I₄ I₃
k₃: I₃ I₁ I₄ I₂
Assuming the number of candidates for selection (m) from each group to be 2, the ordered groups of candidate objects closest with m = 2 would be
k₁: I₁ I₃
k₂: I₁ I₂
k₃: I₃ I₁
Since the pool of objects is the union of these objects, the pool comprises objects (I₁, I₂ I₃).

The method can be generalised as follows: for each of these *K* sorted sets, the m closest neighbours are candidates for the pool, resulting in a pool comprising at least m and at most *K* x m objects. Preferably the objects in the pool are tagged with an identifier indicative of the rank assigned to a given object in the pool: the rank is determined based on the real-valued distance from the reference image according to the metrics above (in this case the L1 metric for each feature). Thus in this example image I₁ has rank 1 for features k₁ and k₂, image I₂ has rank 2 for feature k₂ and image I₃ has rank 1 for feature k₃. This ranking information is used to determine a distribution of images I₁ I₂ I₃ with respect to the focal-image, Iₓ, as will be described below.

Thereafter a different focal object is selected (per "Loop 2"), and steps S401 ... S409 are repeated for this different object. The result of these steps is a plurality of pools of objects, one pool per object, each object in a given pool being considered to be one of the m closest neighbours to the focal-object Iₓ. It will therefore be appreciated that each object in data store DB1 is the focal image with respect to a pool of objects stored in the post-processed file 226, and that each pool comprises a subset of the objects in the data store DB1.

Once the post-processing has been completed, the server S1 can communicate with either of the terminals T1, T2 so as to transmit data indicative of a focal object and its corresponding pool of objects so as to provide the user of the terminal with information relating to the focal object. In one arrangement the terminal T1 is configured with a web browser, which is configured to run various Java Script code and thereby communicate with the web server 221 of the server S1 so as to retrieve object data and transmit data requests. The web server 221 is configured with a bespoke Servlet^{(™)} which communicates with the scripts running within the terminal browser using HTML and XML, preferably using Ajax^{(™)}.

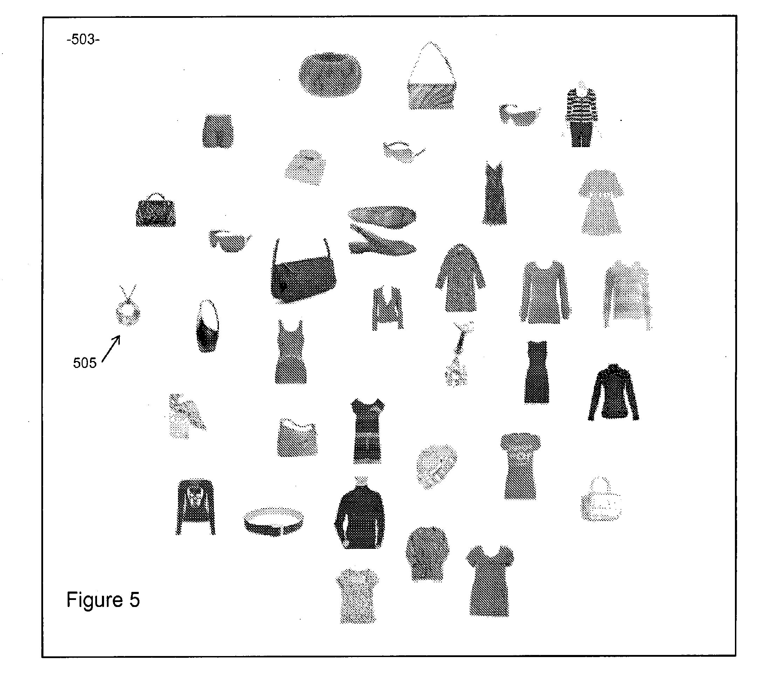

The focal object can be selected randomly or on the basis of criteria specified either by the user or by an automated service; in relation to user selection, such criteria can be entered via user selection in a display area, as will now be described with reference to Figures 5 - 7. Figure 5 shows a display area of terminal T1, configured to render objects selected randomly from the data store DB1 (thus with no association to a group or pool). In this example 34 objects have been selected at random, and these have been arranged in the display area 503. Whilst not shown in Figure 5, the display area 503 is associated with a user interface which enables the user to select (e.g. by use of a mouse, determination of user gaze etc.) an object rendered in the area 503.

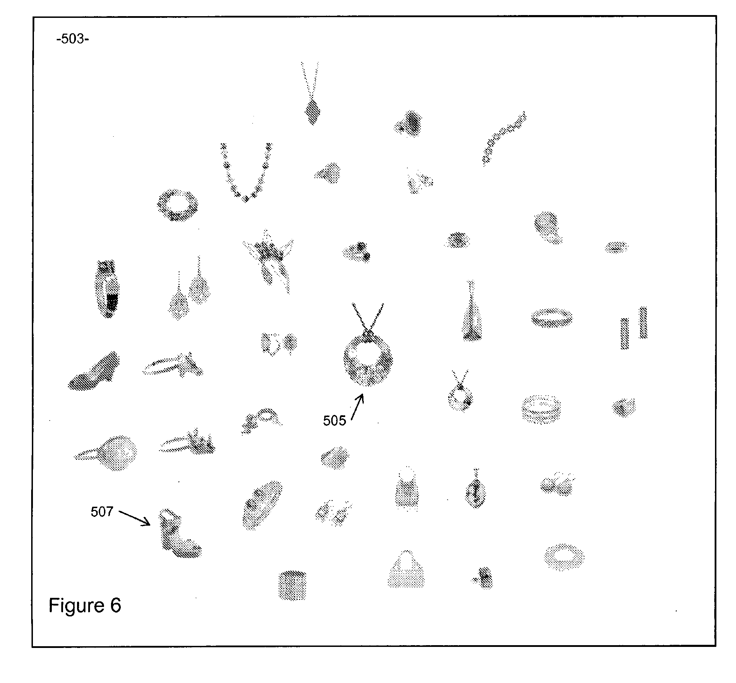

Figure 6 shows the same display area 503, rendered in response to selection of one 505 of the objects randomly selected for display in Figure 5. Such selection effectively results in designation of an object as a focal object and causes the terminal T1 to transmit a query based thereon to the web server 221. In response to the query, the web server 221 triggers retrieval of a corresponding pool of objects from the post-processed data store 226. The files corresponding to objects in the retrieved pool of objects are then transmitted to the terminal T1, and the objects are rendered on the basis of the ranking information associated therewith. More specifically, the rankings associated with the neighbours are used to position the pool of objects such that the neighbour of rank 1 is positioned first, then the neighbour of rank 2 etc. If, as is the case with the current example, an object is a neighbour for more than one feature and the rankings in relation to the features are different, the smallest rank determines where the object is rendered. Recalling the orderings of the objects in the example set out above, namely
k₁: I₁ I₃ I₄ I₂
k₂: I₁ I₂ I₄ I₃
k₃: I₃ I₁ I₄ I₂
Their rankings can be expressed as follows:

| | k₁ | k₂ | k₃ |
|---|---|---|---|
| Rank 1 | I₁ | I₁ | I₃ |
| Rank 2 | I₃ | I₂ | I₁ |
| Rank 3 | I₄ | I₄ | I₄ |
| Rank 4 | I₂ | I₃ | I₂ |

As described above, the pool of objects is created by running through the respective groups from top left to bottom right; thus from the first row:

| | |
|---|---|
| I₁ -> k₁ | |
| ... -> k₂ | (no assignment from the top row because image I₁ has already been associated with feature k₁) |
| I₃ -> k₃ | |
| From the second row: | |
| I₂ -> k₂ | |
| From the third row: | |
| I₄ ->k₁ | |

In this way each object is associated with only one feature, and this association forms the basis of the distribution of objects with respect to the focal image, Iₓ. In one arrangement an Archimedean algorithm is used to position the objects: starting at the origin - which coincides with the position of the selected, focal, object 505 - an Archimedan spiral is traced out in fixed angular intervals. Each position in the display area 503 is reviewed in order to determine whether it can accommodate a given object such that no overlap occurs with objects already placed. The process continues until all images have been placed or, if these placement constraints necessitate positioning of an object outside the display area 503, the process starts again with images being scaled down by some constant factor. The algorithm achieves a compact and visually coherent representation of the neighbourhood around the focal object at negligible computational cost. Specifically the complexity is quadratic in the number of images to be displayed, and linear in the number of features.

In the current example, the neighbours are rendered under the features of shape, texture and colour with respect to the current focal image at the centre. Each feature segment spans a 120 degree sector such that objects deemed to be neighbours on the basis of the shape feature are displayed in the bottom right, while those deemed to be neighbours on the basis of colour are displayed in the top right, and those deemed to be neighbours texture are displayed to the left. In an alternative representation, the neighbours could be arranged in concentric rings around the focal object rather than in pie-like segments, where each ring corresponds to a given feature.

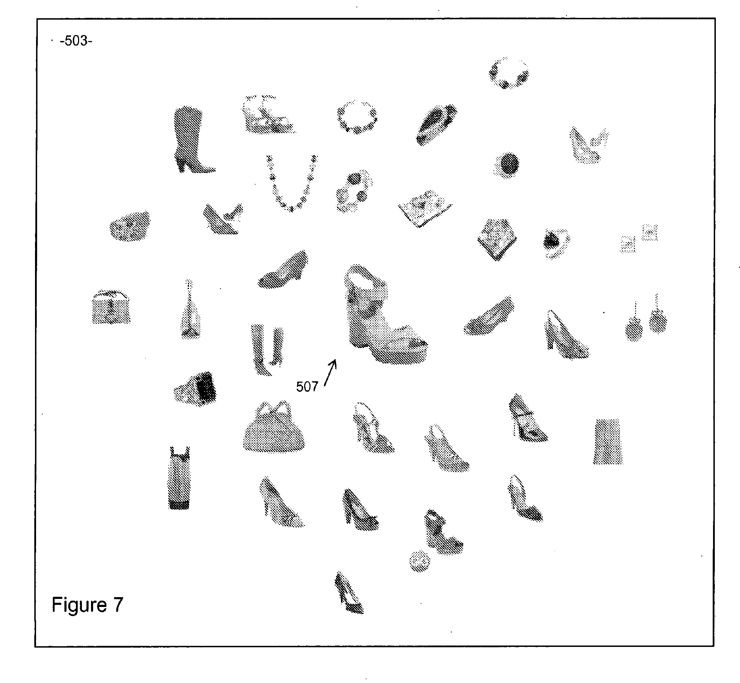

Figure 7 shows the display area 503 in response to selection of a neighbor of the jewelry object 505, namely shoe object 507.

The improvement provided by embodiments of the invention, in relation to conventional methods, can be quantified by measuring the CPU time required to determine the neighbours of an object (averaged over 100 such objects) as the number of objects N from which to select neighbours is varied for constant a number of features, K. In order to make a meaningful comparison between the prior art NN^{k} method and embodiments of the invention both methods are constrained to have the same output, namely a group of T neighbours of some focal object. For embodiments of the invention, this involves sorting each of the *K* lists of distances and recording the top ranked T neighbours. The *K* groups of T neighbours are then combined to obtain a new group of size between T and K*T (depending on how many items appear in several of the *K* groups). For the prior art NNk method, a number of grid points for which the number of neighbours is approximately T is used (the number varies with the number of features, the dataset and the number of images). The performance data are as follows, and clearly demonstrate the technical effects provided by embodiments of the invention:

| N | Prior Art | Invention |
|---|---|---|
| 100 | 1.41 ms | 0.16 ms |
| 500 | 8.82 mis | 0.32 ms |
| 1000 | 13.59 ms | 0.62 ms |
| 5000 | 33.84 ms | 3.9 ms |
| 10000 | 50.89 ms | 8.03 ms |

### Additional details and alternatives

Whilst in the above embodiments, objects are described as being transformed into a common format that is itself a standard format, the image objects could alternatively be transformed into a bespoke format. For example, in the event that the feature extracting engine 225 is implemented using the Java programming language, the engine 225 could alternatively use Java Advanced Imaging APIs to read in images of different formats; the features would be extracted therefrom in the manner described above.

In the above embodiment, a pool of objects comprises objects selected from groups of objects (each group corresponding to a given feature) and the objects within the pool are ranked with respect to a given feature for use in positioning the objects in the display area 503. However, the server S1 could alternatively compute the pair-wise distances (using one of many possible metrics) and apply one of the many existing dimensionality reduction techniques (e.g. MDS = Multidimensional scaling) to this distance matrix to determine locations of the neighbours in a two dimensional space (in the examples described above, display region 503) such that the distances in the plane are maximally similar to the original distances (as per the distance matrix for the objects).

Whilst the above embodiments are concerned with image-type objects, embodiments could alternatively be applied to analyse relationships between audio-type objects and indeed multi-media objects comprising audio and image data. The latter type of objects might, for example, characterise a repository comprising an album of music tracks and art work associated with the music tracks.

In relation to audio-portions of objects or indeed audio-only objects (e.g. files having the MP3 format), the feature extracting engine 225 is arranged to derive the audio features as follows: a numerical description of the acoustic content of an audio file can be derived through analysis of the frequency spectrum of the audio data, since this represents the energy that is associated with different frequencies of the signal over time. In the same way as the colour space is quantised for image analysis, the continuous frequency range can be discretised into a number of bands so as to extract statistical features for each such band. Examples are the mean, the median, the variance, the skewness, the kurtosis, and the minimum and maximum values of the energy. The statistics are computed with respect to time, e.g. the mean energy of a frequency band for audio data is simply the average energy over the duration of the signal. In the image domain, the equivalent to the mean energy of frequency bands of an audio signal would be the fraction of an image belonging to a particular colour bin. In both cases, and as described above in the case of image data, the results can be represented as histograms (in the case of audio over frequency bands and in the case of image over colour).

At a somewhat higher level, features can be extracted that capture the temporal dimension of a signal, typically within the time-scale of the musical present (the 'now' of around 3 seconds length). These can be extracted after applying time-space transformations to the signal and include features like beat, meter and rhythmic pattern. Again these may be captured in the form of single numeric values or histograms. In addition, objects comprising textual data can be analysed for their content, for example by casting textual data into a vectorial representation so as to define distances between text items and to sort images based on their textual similarity as is described above in relation to image data.

The list of file formats presented in the context of the above embodiments is exemplary only. However, it is to be understood that provided features can be extracted in respect of an object, the evaluation and selection methodologies described above will apply to all current and future multimedia formats as they evolve over time.

In the above embodiment, terminal T1 is a personal computer and communicates with the server S1 via fixed line communications links. However, terminal T2, which is a mobile station, could communicate with the server S1 via the radio network N2, which may be can comprise a licensed network portion (such as is provided by cellular networks using e.g. Global System for Mobile Communications (GSM) technology, Wideband Code Division Multiplex Access (WCDMA); Code Division Multiplex Access (CDMA), WiMax) and/or unlicensed network portions (such as is provided by Wireless LANs and Bluetooth technologies). The gateway GW can be a GPRS support node (GGSN) forming part of the mobile network N2. In the event that he terminal T2 is only capable of processing and displaying WAP pages, translation of a web page output from the web server 221 can be performed by a device in the network or by suitable translation software running on the terminal T2.

In another embodiment, the data selection method can be combined with implicit user feedback. That is to say that when a user selects a neighbour from the K subsets of objects (one subset per feature), it may reasonably be assumed that the feature associated with that neighbour is more important to the user than the other features. This information can be used to decide which neighbours to select in the next display event - i.e. the web server 221 should retrieve more neighbours of that feature in the next round. In order to formalise this, each feature can be assigned a weight which is initially the same for all features. Upon selection of a neighbour (and therefore of a feature), the weight of that feature is increased by a certain amount and the weights are subsequently normalised to sum to one. For the sectorial, or segment, display of objects, the angle of the sector for the ith feature can then be set to 2*pi*w_i (in radians), and the number of images to be displayed for that feature to T*w_i (where T is the total number of images to be displayed). By always displaying at least one image corresponding to each feature, users can always shift the weight distribution back in favour of other features. The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer implemented data selection method for selection of objects from a plurality of objects, said plurality of objects comprising objects of a first type (i) and a second type (j), each said object being **characterised** according to a plurality of measurable features (k₁, k₂, k₃) and said object of the first type (i) forming the basis of a selection process, the method comprising performing a selection process in respect of an object of the first type (i), the selection process comprising:
receiving (S301) data identifying the object of the first type;
evaluating (S307) values representative of a measure of similarity between the object of the first type (i) and said objects of the second type (j) on the basis of measurable features associated, respectively, with said object of the first type (i) and said objects of the second type (j);
ranking (S407) said objects of the second type (j) in accordance with said evaluated values,
**characterised in that** said values are evaluated on the basis of a single measurable feature and the evaluation is performed so as to generate a plurality of groups of ranked objects (I₁, I₂, I₃), each group corresponding to a different measurable feature (k₁, k₂, k₃); and
identifying a predetermined number (m) of objects from said plurality of groups (K) of ranked objects (I₁, I₂, I₃), whereby to select objects on the basis of said object of the first type (i).

2. A method according to claim 1, in which each of said predetermined number (m) of objects is a different object.

3. A method according to claim 1 or claim 2, in which said predetermined number (m) of objects are identified by sequentially reviewing objects within individual ones of said groups (K) of ranked objects (I₁, I₂, I₃).

4. A method according to any one of the preceding claims, including repeating said selection process for a plurality of said objects of the first type (i).

5. A method according to claim 4, in which each execution of the selection process is performed in respect of a different said object of the first type (i) such that any given object of the first type (i) for a given execution of the selection process is an object of the second type (j) for a different execution of the selection process.

6. A method according to claim 4 or claim 5, in which for each said object of the first type (i), the method comprises storing (S405) said corresponding predetermined number (m) of objects in association with the object of the first type (i).

7. A method according to any one of the preceding claims, further comprising generating output indicative of said predetermined number (m) of objects in association with a given said object of the first type (i), and rendering the objects in a display area (503).

8. A method according to claim 7, comprising rendering said objects on the basis of said rankings such that objects having a relatively high ranking order are positioned closer to the given said object of the first type (i) than are objects having a relatively low ranking order.

9. A method according to claim 7 or claim 8, in which the display area (503) is arranged to render said objects as user-selectable objects and the method further comprises:
responsive to selection of an object in the display area (503); designating the selected object (Iₓ, 505) as an object of the first type (i);
retrieving data indicative of the predetermined number of objects corresponding to the designated object (Iₓ, 505); and
rendering the retrieved object data in the display area (503).

10. A method according to any one of the preceding claims, comprising selecting (S409) object data from a repository (203, DB1, 226) so as to receive the data identifying an object of the first type (i), the repository comprising said object of the first type (i) and the plurality of objects of the second type (j).

11. A method according to claim 10, in which, responsive to receipt of data indicating a newly received object, the method comprises:
adding the newly received object to the repository (203, DB1, 226) so as to generate an updated repository; and
performing the selection process in respect of each said object in the updated repository.

12. A method according to any one of the preceding claims, in which the objects comprise multimedia objects.

13. A method according to claim 12, in which said objects comprise image files, and the measurable features (k₁, k₂, k₃) comprise any one or some of shape, texture and colour.

14. A method according to claim 12, in which said objects comprise audio files, and the measurable features (k₁, k₂, k₃) comprise any one or some of tone, timbre, pitch, volume.

15. A method according to any one of the preceding claims, in which said objects comprise alphanumeric characters.

16. A method according to any one of claim 12 to claim 15, in which the selection process further comprises extracting said measurable features (k₁, k₂, k₃) from data associated with the objects.

17. A data selection system for selection of objects from a plurality of objects, said plurality of objects comprising objects of a first type (i) and a second type (j), each said object being **characterised** according to a plurality of measurable features (k₁, k₂, k₃), the system comprising:
an evaluation processing component (227) arranged to receive data identifying an object of the first type (i), the evaluation processing component (227) being arranged to:
evaluate values representative of a measure of similarity between the object of the first type (i) and said objects of the second type (j) on the basis of measurable features (k₁, k₂, k₃) associated, respectively, with said object of the first type (i) and said objects of the second type (j); and
rank said objects of the second type (j) in accordance with said evaluated values,
**characterised in that** said evaluation processing component is arranged to evaluate said values on the basis of a single measurable feature (k₁, k₂, k₃) so as to generate a plurality of groups (K) of ranked objects (I₁, I₂, I₃), each group corresponding to a different measurable feature (k₁, k₂, k₃); and
a selection processing component (227) arranged to identify a predetermined number (m) of objects from said plurality of groups (K) of ranked objects (I₁, I₂, I₃), whereby to select objects on the basis of said object of the first type (i).

18. A data selection system according to claim 17, wherein each of said predetermined number (m) of objects is a different object.

19. A data selection system according to claim 17 or claim 18, wherein said selection processing component (227) is arranged to identify said predetermined number (m) of objects by sequentially reviewing objects within individual ones of said groups (K) of ranked objects (I₁, I₂, I₃).

20. A data selection system according to any one of claim 17 to claim 19, wherein the evaluation processing component (227) is arranged to receive data for a plurality of said objects of the first type (i), and the selection processing component (227) is arranged to select objects on the basis of each said object of the first type (i).

21. A data selection system according to claim 20, wherein any given object of the first type (i) that is evaluated by the evaluation processing component (227) is an object of the second type (j) in respect of a different instantiation of said evaluation processing component (227).

22. A data selection system according to any one of claim 17 to claim 21, further comprising a storage system (203, DB1, 226) arranged to store said corresponding predetermined number (m) of objects in association with the object of the first type (i).

23. A data selection system according to any one of claim 17 to claim 22, further comprising an interface for outputting data indicative of said predetermined number (m) of objects in association with a given said object of the first type (i) to a terminal (T₁, T₂).

24. A data selection system according to claim 23, wherein said terminal (T₁, T₂) is arranged to render the objects in a display area (503) thereof.

25. A data selection system according to claim 24, wherein the terminal is arranged to render said objects on the basis of said rankings such that objects having a relatively high ranking order are positioned closer to the given said object of the first type (i) than are objects having a relatively low ranking order.

26. A data selection system according to claim 24 or claim 25, wherein the terminal (T₁, T₂) is arranged to render said objects as user-selectable objects in the display area (503), the terminal (T₁, T₂) comprising graphical user interface means arranged to respond to selection of an object in the display area (503) so as to designate the selected object (Iₓ, 505) as an object of the first type (i), wherein the terminal (T₁, T₂) is arranged to communicate with the data selection system so as to send data indicative of the designated object of the first type to the storage system (203, DB1, 226),
wherein the storage system (203, DB1, 226) is arranged to retrieve a predetermined number of objects corresponding to the designated object (Iₓ, 505) of the first type (i) and the terminal (T₁, T₂) is arranged to render the retrieved object data in the display area (503).

27. A data selection system according to any one of claim 17 to claim 26, wherein the storage system (203, DB1, 226) is arranged to hold said object of the first type (i) and the plurality of objects of the second type (j).

28. A data selection system according to claim 27, wherein, responsive to receipt of data indicating a newly received object, the storage system (203, DB1, 226) is arranged to add the newly received object to the repository so as to generate an updated repository, and the data selection system is arranged to trigger said evaluation processing component in respect of the objects stored in the updated repository.

29. A data selection system according to any one of claim 17 to claim 28, in which the objects comprise multimedia objects.

30. A data selection system according to claim 29, in which said objects comprise image files, and the measurable features (k₁, k₂, k₃) comprise any one or some of shape, texture, colour, intensity, edge effects.

31. A data selection system according to claim 29, in which said objects comprise audio files, and the measurable features (k₁, k₂, k₃) comprise any one or some of tone, timbre, pitch, volume.

32. A computer program, or a set of computer programs, comprising a set of instructions arranged to cause a computer, or a suite of computers, to perform the method according to any one of claim 1 to claim 16.

33. A computer readable carrier comprising the computer program of claim 32.

## Patentansprüche

1. Computer-implementiertes Datenauswahlverfahren zum Auswählen von Objekten aus einer Mehrzahl von Objekten, wobei die Mehrzahl von Objekten, Objekte eines ersten Typs (i) und eines zweiten Typs (j) aufweist, wobei jedes Objekt entsprechend einer Mehrzahl von messbaren Merkmalen (k₁, k₂, k₃) **gekennzeichnet** ist und das Objekt des ersten Typs (i) die Grundlage eines Auswahlprozesses bildet, wobei das Verfahren das Ausführen eines Auswahlprozesses unter Berücksichtigung eines Objekts des ersten Typs (i) aufweist, wobei der Auswahlprozess aufweist:
Empfangen (S301) von Daten, die das Objekt des ersten Typs identifizieren;
Auswerten (S307) von Werten, die ein Maß von Ähnlichkeit zwischen dem Objekt des ersten Typs (i) und den Objekten des zweiten Typs (j) auf der Grundlage von messbaren Merkmalen repräsentieren, die entsprechend mit dem Objekt des ersten Typs (i) und den Objekten des zweiten Typs (j) assoziiert sind;
Einordnen (S407) der Objekte des zweiten Typs (j) gemäß den ausgewerteten Werten,
**dadurch gekennzeichnet, dass** die Werte auf der Grundlage eines einzelnen messbaren Merkmals ausgewertet sind und die Auswertung ausgeführt ist, um eine Mehrzahl von Gruppen von eingeordneten Objekten (I₁, I₂, I₃) zu erzeugen, wobei jede Gruppe mit einem anderen messbaren Merkmal (k₁, k₂, k₃) korrespondiert; und
Identifizieren einer vorbestimmten Anzahl (m) von Objekten aus der Mehrzahl von Gruppen (K) von eingeordneten Objekten (I₁, I₂, I₃), zum Auswählen von Objekten auf der Grundlage des Objekts des ersten Typs (i).

2. Verfahren nach Anspruch 1, wobei jede vorbestimmte Anzahl (m) von Objekten ein anderes Objekt ist.

3. Verfahren nach Anspruch 1 oder 2, wobei die vorbestimmte Anzahl (m) von Objekten durch sequentielle Nachprüfung von Objekten innerhalb der einzelnen Gruppen (K) von eingeordneten Objekten (I₁, I₂, I₃) identifiziert wird.

4. Verfahren nach einem der vorhergehenden Ansprüche, wobei das Verfahren das Wiederholen des Auswahlprozesses für eine Mehrzahl der Objekte des ersten Typs (i) aufweist.

5. Verfahren nach Anspruch 4, wobei jede Ausführung des Auswahlprozesses hinsichtlich eines anderen Objekts des ersten Typs (i), derart ausgeführt ist, dass jedes gegebene Objekt des ersten Typs (i) für eine gegebene Ausführung des Auswahlprozesses ein Objekt des zweiten Typs (j) für eine andere Ausführung des Auswahlprozesses darstellt.

6. Verfahren nach Anspruch 4 oder 5, wobei das Verfahren für jedes Objekt des ersten Typs (i) das Speichern (S405) der entsprechenden vorbestimmten Anzahl (m) von Objekten in Assoziation mit dem Objekt des ersten Typs (i) aufweist.

7. Verfahren nach einem der vorhergehenden Ansprüche, wobei das Verfahren zusätzlich das Erzeugen eines Ausgangs, welcher die vorbestimmte Anzahl (m) von Objekten in Assoziation mit dem gegebenen Objekt des ersten Typs (i) anzeigt und das Wiedergeben der Objekte in einem Anzeigebereich (503) aufweist.

8. Verfahren nach Anspruch 7, wobei das Verfahren eine Wiedergabe der Objekte auf der Grundlage der Rangfolge derart aufweist, dass Objekte mit einer relativ hohen Rangordnung näher an dem gegebenen Objekt des ersten Typs (i) positioniert sind als Objekte mit einer relativ niedrigen Rangordnung.

9. Verfahren nach Anspruch 7 oder Anspruch 8, wobei der Anzeigebereich (503) zum Wiedergeben der Objekte als benutzerwählbare Objekte eingerichtet ist und das Verfahren zusätzlich aufweist:
Zuordnen des ausgewählten Objekts (Iₓ, 505) als ein Objekt des ersten Typs (i); als Reaktion auf das Auswählen eines Objektes in dem Anzeigebereich (503);
Abrufen von Daten, die die vorbestimmte Anzahl von Objekten korrespondierend mit dem zugeordneten Objekt (Iₓ, 505) anzeigen; und
Wiedergeben der abgerufenen Objektdaten in dem Anzeigebereich (503).

10. Verfahren nach einem der vorhergehenden Ansprüche, mit dem Schritt Auswählen (S409) von Objektdaten aus einem Repository (203, DB1, 226), um die Daten, die ein Objekt des ersten Typs (i) erkennen, zu empfangen, wobei das Repository das Objekt des ersten Typs (i) und die Mehrzahl von Objekten des zweiten Typs (j) aufweist.

11. Verfahren nach Anspruch 10, wobei als Reaktion auf das Empfangen von Daten, die ein neu empfangenes Objekt anzeigen, das Verfahren umfasst:
Hinzufügen des neu empfangenen Objektes zu dem Repository (203, DB1, 226), um ein aktuelles Repository zu erzeugen; und
Ausführen des Auswahlprozesses hinsichtlich jedes Objektes in dem aktualisierten Repository.

12. Verfahren nach einem der vorgehenden Ansprüche, wobei die Objekte Multimediaobjekte aufweisen.

13. Verfahren nach Anspruch 12, wobei die Objekte Bilddateien aufweisen und die messbaren Merkmale (k₁, k₂, k₃) aus Form, Textur und Farbe jedes einzelne oder einige davon aufweisen.

14. Verfahren nach Anspruch 12, wobei die Objekte Audiodateien aufweisen und die messbaren Merkmale (k₁, k₂, k₃) aus Ton, Timbre, Tonlage und Lautstärk jedes einzelne oder einige davon aufweisen.

15. Verfahren nach einem der vorhergehenden Ansprüche, wobei die Objekte alphanumerische Zeichen aufweisen.

16. Verfahren nach einem der Ansprüche 12 bis 15, wobei der Auswahlprozess zusätzlich eine Extraktion der messbaren Merkmale (k₁, k₂, k₃) aus Daten assoziierend mit den Objekten aufweist.

17. Datenauswahlsystem zum Auswählen von Objekten aus einer Mehrzahl von Objekten, wobei die Mehrzahl von Objekten, Objekte eines ersten Typs (i) und eines zweiten Typs (j) aufweist, wobei jedes Objekt entsprechend einer Mehrzahl von messbaren Merkmalen (k₁, k₂, k₃) **gekennzeichnet** ist, wobei das System aufweist:
eine Auswertungsprozesskomponente (227) eingerichtet zum Empfangen von Daten, die ein Objekt des ersten Typs (i) identifizieren, wobei die Auswertungsprozesskomponente (227) ist eingerichtet zum:
Auswerten von Werten, die ein Maß von Ähnlichkeit zwischen dem Objekt des ersten Typs (i) und den Objekten des zweiten Typs (j) auf der Grundlage von messbaren Merkmalen repräsentieren, die entsprechend mit dem Objekt des ersten Typs (i) und den Objekten des zweiten Typs (j) assoziiert sind; und
Einordnen der Objekte des zweiten Typs (j) gemäß den ausgewerteten Werten,
**gekennzeichnet dadurch, dass** die Auswertungsprozesskomponente eingerichtet ist, die Werte auf der Grundlage eines einzelnen messbaren Merkmals (k₁, k₂, k₃) auszuwerten, um eine Mehrzahl von Gruppen (K) von eingeordneten Objekten (I₁, I₂, I₃) zu erzeugen, wobei jede Gruppe mit einem anderen messbaren Merkmal (k₁, k₂, k₃) korrespondiert; und
eine Auswahlprozesskomponente (227) eingerichtet zum Identifizieren einer vorbestimmten Anzahl (m) von Objekten aus der Mehrzahl von Gruppen (K) von eingeordneten Objekten (I₁, I₂, I₃), zum Auswählen von Objekten auf der Grundlage des Objekts des ersten Typs (i).

18. Datenauswahlsystem nach Anspruch 17, wobei jede der vorbestimmten Anzahl (m) von Objekten ein anderes Objekt ist.

19. Datenauswahlsystem nach Anspruch 17 oder 18, wobei die Auswahlprozesskomponente (227) zum Identifizieren der vorbestimmten Anzahl (m) von Objekten durch sequentieller Nachprüfung von Objekten innerhalb der einzelnen Gruppen (K) von eingeordneten Objekten (I₁, I₂, I₃) eingerichtet ist.

20. Datenauswahlsystem nach einem der Ansprüche 17 bis 19, wobei die Auswertungsprozesskomponente (227) zum Empfangen von Daten für eine Mehrzahl der Objekte des ersten Typs (i) und die Auswertungsprozesskomponente (227) zum Auswählen von Objekten auf der Grundlage jedes Objektes des ersten Typs (i) eingerichtet ist.

21. Datenauswahlsystem nach Anspruch 20, wobei jedes gegebene Objekt des ersten Typs (i), welches mittels der Auswertungsprozesskomponente (227) ausgewertet ist, ein Objekt des zweiten Typs (j) gemäß einer anderen Instantüerung der Auswertungsprozesskomponente (227) ist.

22. Datenauswahlsystem nach einem der Ansprüche 17 bis 21, ferner mit einem Speichersystem (203, DB1, 226), eingerichtet zum Speichern der korrespondierenden vorbestimmten Anzahl (m) von Objekten in Assoziation mit dem Objekt des ersten Typs (i).

23. Datenauswahlsystem nach einem der Ansprüche 17 bis 22, ferner mit einer Schnittstelle zum Aussenden von Daten, die die vorbestimmte Anzahl (m) von Objekten in Assoziation mit einem gegebenen Objekt des ersten Typs (i) anzeigen, zu einem Terminal (T₁, T₂).

24. Datenauswahlsystem nach Anspruch 23, wobei das Terminal (T₁, T₂) zum Wiedergeben der Objekte in einem Anzeigebereich (503) eingerichtet ist.

25. Datenauswahlsystem nach Anspruch 24, wobei das Terminal zum Wiedergeben der Objekte auf der Grundlage der Rangfolgen, so dass Objekte mit einer relativ hohen Rangordnung näher an dem gegebenen Objekt des ersten Typs (i) positioniert sind als Objekte mit einer relativ niedrigen Rangordnung, eingerichtet ist.

26. Datenauswahlsystem nach Anspruch 24 oder 25, wobei das Terminal (T₁, T₂) zum Wiedergeben der Objekte als benutzerwählbare Objekte in dem Anzeigebereich (503) eingerichtet ist, wobei das Terminal (T₁, T₂) eine grafische Benutzerschnittstellemittel zur Beantwortung des Auswählens eines Objekts in dem Anzeigebereich (503) aufweist, um das ausgewählte Objekt (Iₓ, 505) als ein Objekt des ersten Typs (i) zuzuweisen, wobei das Terminal (T₁, T₂) zum Kommunizieren mit dem Datenauswahlsystem eingerichtet ist, um Daten, die das zugewiesene erste Objekt des ersten Typs anzeigen, an das Speichersystem ( 203, DB1, 226) zu senden,
wobei das Speichersystem (203, DB1, 226) zum Abrufen einer vorbestimmten Anzahl von Objekten korrespondierend mit dem zugewiesenen Objekt (Ix, 505) des ersten Typs (i) und das Terminal (T1, T2) zum Wiedergeben der zugewiesenen Objektdaten in dem Anzeigebereich (503) eingerichtet ist.

27. Datenauswahlsystem nach einem der Ansprüche 17 bis 26, wobei das Speichersystem (203, DB1, 226) zum Halten des Objektes des ersten Typs (i) und die Mehrzahl von Objekten des zweiten Typs (j) eingerichtet ist.

28. Datenauswahlsystem nach Anspruch 27, wobei das Speichersystem (203, DB1, 226) als Reaktion auf einen Empfang von Daten, die ein neu empfangenes Objekt anzeigen, zum Hinzufügen des neu empfangenen Objektes zu dem Repository ausgestaltet ist, um ein aktualisiertes Repository zu erzeugen und das Datenauswahlsystem zum Triggern der Auswertungsprozesskomponente gemäß den Objekten, die in dem aktuellen Repository gespeichert sind, eingerichtet ist.

29. Datenauswahlsystem nach einem der Ansprüche 17 bis 28, wobei die Objekte Multimediaobjekte aufweisen.

30. Datenauswahlsystem nach Anspruch 29, wobei die Objekte Bilddateien aufweisen und die messbaren Merkmale (k1, k2, k3) aus Form, Textur, Farbe, Intensität, Kanteneffekte, jedes einzelne oder einige davon aufweisen.

31. Datenauswahlsystem nach Anspruch 29, wobei die Objekte Audiodateien aufweisen und die messbaren Merkmale (k1, k2, k3) aus Ton, Timbre, Tonlage, Lautstärke, jedes einzelne oder einige davon aufweisen.

32. Computerprogramm oder eine Reihe von Computerprogrammen, mit einer Reihe von Instruktionen, angepasst zum Erzeugen eines Computers oder zur Computerunterstützung zum Ausführen des Verfahrens nach einem der Ansprüche 1 bis 16.

33. Computerlesbares Medium, welches das Computerprogramm des Anspruchs 32 aufweist.

## Revendications

1. Procédé de sélection de données mis en oeuvre par ordinateur pour la sélection d'objets parmi une pluralité d'objets, ladite pluralité d'objets comprenant des objets d'un premier type (i) et d'un deuxième type (j), chaque dit objet étant **caractérisé en** fonction d'une pluralité de caractéristiques mesurables (k₁, k₂, k₃) et ledit objet du premier type (i) formant la base d'un processus de sélection, le procédé comprenant l'exécution d'un processus de sélection par rapport à un objet du premier type (i), le processus de sélection comprenant :
la réception (S301) de données identifiant l'objet du premier type ;
l'évaluation (S307) de valeurs représentatives d'une mesure de similarité entre l'objet du premier type (i) et lesdits objets du deuxième type (j) d'après des caractéristiques mesurables associées, respectivement, audit objet du premier type (i) et auxdits objets du deuxième type (j) ;
le classement par ordre (S407) desdits objets du deuxième type (j) en fonction desdites valeurs évaluées,
**caractérisé en ce que** lesdites valeurs sont évaluées d'après une unique caractéristique mesurable et l'évaluation est effectuée de manière à engendrer une pluralité de groupes d'objets classés par ordre (I₁, I₂, I₃), chaque groupe correspondant à une caractéristique mesurable différente (k₁, k₂, k₃) ; et
l'identification d'un nombre prédéterminé (m) d'objets parmi ladite pluralité de groupes (K) d'objets classés par ordre (I₁, I₂, I₃), pour sélectionner ainsi des objets d'après ledit objet du premier type (i).

2. Procédé selon la revendication 1, dans lequel chacun dudit nombre prédéterminé (m) d'objets est un objet différent.

3. Procédé selon la revendication 1 ou 2, dans lequel ledit nombre prédéterminé (m) d'objets est identifié en réexaminant séquentiellement des objets dans des groupes individuels desdits groupes (K) d'objets classés par ordre (I₁, I₂, I₃).

4. Procédé selon l'une quelconque des revendications précédentes, comprenant la répétition dudit processus de sélection pour une pluralité desdits objets du premier type (i).

5. Procédé selon la revendication 4, dans lequel chaque exécution du processus de sélection est effectuée par rapport à un dit objet différent du premier type (i) de manière que n'importe quel objet donné du premier type (i), pour une exécution donnée du processus de sélection, soit un objet du deuxième type (j) pour une exécution différente du processus de sélection.

6. Procédé selon la revendication 4 ou 5, dans lequel pour chaque dit objet du premier type (i), le procédé comprend la mémorisation (S405) dudit nombre prédéterminé correspondant (m) d'objets en association avec l'objet du premier type (i).

7. Procédé selon l'une quelconque des revendications précédentes, comprenant en outre la génération d'une sortie indicative dudit nombre prédéterminé (m) d'objets en association avec un dit objet donné du premier type (i) et le rendu des objets dans une zone d'affichage (503).

8. Procédé selon la revendication 7, comprenant le rendu desdits objets d'après lesdits classements par ordre de manière que des objets ayant un ordre de classement relativement élevé soient positionnés plus près dudit objet donné du premier type (i) que des objets ayant un ordre de classement relativement bas.

9. Procédé selon la revendication 7 ou 8, dans lequel la zone d'affichage (503) est agencée pour restituer lesdits objets comme des objets sélectionnables par utilisateur et le procédé comprend en outre :
en réponse à la sélection d'un objet dans la zone d'affichage (503), la désignation de l'objet sélectionné (Iₓ, 505) comme un objet du premier type (i) ;
la récupération de données indicatives du nombre prédéterminé d'objets correspondant à l'objet désigné (Iₓ, 505) ; et
le rendu des données d'objet récupérées dans la zone d'affichage (503).

10. Procédé selon l'une quelconque des revendications précédentes, comprenant la sélection (S409) de données d'objet à partir d'un référentiel (203, DB1, 226) de manière à recevoir les données identifiant un objet du premier type (i), le référentiel comprenant ledit objet du premier type (i) et la pluralité d'objets du deuxième type (j).

11. Procédé selon la revendication 10, dans lequel, en réponse à la réception de données indiquant un objet nouvellement reçu, le procédé comprend :
l'ajout de l'objet nouvellement reçu au référentiel (203, DB1, 226) de manière à engendrer un référentiel mis à jour ; et
l'exécution du processus de sélection par rapport à chaque dit objet dans le référentiel mis à jour.

12. Procédé selon l'une quelconque des revendications précédentes, dans lequel les objets comprennent des objets multimédia.

13. Procédé selon la revendication 12, dans lequel lesdits objets comprennent des fichiers d'images et les caractéristiques mesurables (k₁, k₂, k₃) comprennent l'une quelconque ou plusieurs parmi la forme, la texture et la couleur.

14. Procédé selon la revendication 12, dans lequel lesdits objets comprennent des fichiers audio et les caractéristiques mesurables (k₁, k₂, k₃) comprennent l'un quelconque ou plusieurs parmi la tonalité, le timbre, la hauteur tonale, le volume.

15. Procédé selon l'une quelconque des revendications précédentes, dans lequel lesdits objets comprennent des caractères alphanumériques.

16. Procédé selon l'une quelconque des revendications 12 à 15, dans lequel le processus de sélection comprend en outre l'extraction desdites caractéristiques mesurables (k₁, k₂, k₃) à partir de données associées aux objets.

17. Système de sélection de données pour la sélection d'objets parmi une pluralité d'objets, ladite pluralité d'objets comprenant des objets d'un premier type (i) et d'un deuxième type (j), chaque dit objet étant **caractérisé en** fonction d'une pluralité de caractéristiques mesurables (k₁, k₂, k₃), le système comprenant :
un composant de traitement d'évaluation (227) agencé pour recevoir des données identifiant un objet du premier type (i), le composant de traitement d'évaluation (227) étant agencé pour :
évaluer des valeurs représentatives d'une mesure de similarité entre l'objet du premier type (i) et lesdits objets du deuxième type (j) d'après des caractéristiques mesurables (k₁, k₂, k₃) associées, respectivement, audit objet du premier type (i) et auxdits objets du deuxième type (j) ; et
classer par ordre lesdits objets du deuxième type (j) en fonction desdites valeurs évaluées,
**caractérisé en ce que** ledit composant de traitement d'évaluation est agencé pour évaluer lesdites valeurs d'après une unique caractéristique mesurable (k₁, k₂, k₃) de manière à engendrer une pluralité de groupes (K) d'objets classés par ordre (I₁, I₂, I₃), chaque groupe correspondant à une caractéristique mesurable différente (k₁, k₂, k₃) ; et
un composant de traitement de sélection (227) agencé pour identifier un nombre prédéterminé (m) d'objets parmi ladite pluralité de groupes (K) d'objets classés par ordre (I₁, I₂, I₃), pour sélectionner ainsi des objets d'après ledit objet du premier type (i).

18. Système de sélection de données selon la revendication 17, dans lequel chacun dudit nombre prédéterminé (m) d'objets est un objet différent.

19. Système de sélection de données selon la revendication 17 ou 18, dans lequel ledit composant de traitement de sélection (227) est agencé pour identifier ledit nombre prédéterminé (m) d'objets en réexaminant séquentiellement des objets dans des groupes individuels desdits groupes (K) d'objets classés par ordre (I₁, I₂, I₃).

20. Système de sélection de données selon l'une quelconque des revendications 17 à 19, dans lequel le composant de traitement d'évaluation (227) est agencé pour recevoir des données pour une pluralité desdits objets du premier type (i) et le composant de traitement d'évaluation (227) est agencé pour sélectionner des objets d'après chaque dit objet du premier type (i).

21. Système de sélection de données selon la revendication 20, dans lequel n'importe quel objet donné du premier type (i) qui est évalué par le composant de traitement d'évaluation (227) est un objet du deuxième type (j) par rapport à une instanciation différente dudit composant de traitement d'évaluation (227) .

22. Système de sélection de données selon l'une quelconque des revendications 17 à 21, comprenant en outre un système de stockage (203, DB1, 226) agencé pour stocker ledit nombre prédéterminé correspondant (m) d'objets en association avec l'objet du premier type (i).

23. Système de sélection de données selon l'une quelconque des revendications 17 à 22, comprenant en outre une interface pour délivrer des données indicatives dudit nombre prédéterminé (m) d'objets en association avec un dit objet donné du premier type (i) à un terminal (T₁, T₂).

24. Système de sélection de données selon la revendication 23, dans lequel ledit terminal (T₁, T₂) est agencé pour effectuer le rendu des objets dans une zone d'affichage (503) de celui-ci.

25. Système de sélection de données selon la revendication 24, dans lequel le terminal est agencé pour effectuer le rendu desdits objets d'après lesdits classements par ordre, de manière que des objets ayant un ordre de classement relativement élevé soient positionnés plus près dudit objet donné du premier type (i) que des objets ayant un ordre de classement relativement bas.

26. Système de sélection de données selon la revendication 24 ou 25, dans lequel le terminal (T₁, T₂) est agencé pour effectuer le rendu desdits objets comme des objets sélectionnables par utilisateur dans la zone d'affichage (503), le terminal (T₁, T₂) comprenant des moyens d'interface utilisateur graphique agencés pour répondre à la sélection d'un objet dans la zone d'affichage (503) de manière à désigner l'objet sélectionné (Iₓ, 505) comme un objet du premier type (i), dans lequel le terminal (T₁, T₂) est agencé pour communiquer avec le système de sélection de données de manière à envoyer des données indicatives de l'objet désigné du premier type au système de stockage (203, DB1, 226),
dans lequel le système de stockage (203, DB1, 226) est agencé pour récupérer un nombre prédéterminé d'objets correspondant à 1"objet désigné (Iₓ, 505) du premier type (i) et le terminal (T₁, T₂) est agencé pour restituer les données d'objets récupérés dans la zone d'affichage (503).

27. Système de sélection de données selon l'une quelconque des revendications 17 à 26, dans lequel le système de stockage (203, DB1, 226) est agencé pour conserver ledit objet du premier type (i) et la pluralité d'objets du deuxième type (j).

28. Système de sélection de données selon la revendication 27, dans lequel, en réponse à la réception de données indiquant un objet nouvellement reçu, le système de stockage (203, DB1, 226) est agencé pour ajouter l'objet nouvellement reçu au référentiel de manière à engendrer un référentiel mis à jour et le système de sélection de données est agencé pour déclencher ledit composant de traitement d'évaluation par rapport aux objets mémorisés dans le référentiel mis à jour.

29. Système de sélection de données selon l'une quelconque des revendications 17 à 28, dans lequel les objets comprennent des objets multimédia.

30. Système de sélection de données selon la revendication 29, dans lequel lesdits objets comprennent des fichiers d'images et les caractéristiques mesurables (k₁, k₂, k₃) comprennent l'un quelconque ou plusieurs parmi la forme, la texture, la couleur, l'intensité, les effets de bord.

31. Système de sélection de données selon la revendication 29, dans lequel lesdits objets comprennent des fichiers audio et les caractéristiques mesurables (k₁, k₂, k₃) comprennent l'un quelconque ou plusieurs parmi la tonalité, le timbre, la hauteur tonale, le volume.

32. Programme d'ordinateur, ou ensemble de programmes d'ordinateur, comprenant un ensemble d'instructions agencées pour faire exécuter à un ordinateur, ou un ensemble d'ordinateurs, le procédé selon l'une quelconque des revendications 1 à 16.

33. Support lisible par ordinateur comprenant un programme d'ordinateur selon la revendication 32.
